# EUROPEAN PATENT APPLICATION

(11) **EP 2 423 899 A1**
(43) Date of publication of application: **29.02.2012**
(21) Application number: 10766681.0
(22) Date of filing: 20.04.2010
(51) Int. Cl.: G08G 1/017, G08G 1/054, G06K 9/32, G06K 9/00

(54) **METHOD FOR IDENTIFYING REFLECTING OBJECTS SUBJECTED TO VARIABLE LIGHTING CONDITIONS AND SYSTEM FOR PERFORMING SAID METHOD**

(30) Priority: 20.04.2009 ES 200930077
(71) Applicant: Imagsa Technologies S. A., 08041 Barcelona (ES)
(72) Inventor: LISA MINGO, Ferran, E-08041 Barcelona (ES)
(74) Representative: Ponti Sales, Adelaida
(86) International application number: PCT/ES2010/070240
(87) International publication number: WO 2010/122198

(57) **Abstract**

Method for identifying reflecting objects (1) subjected to variable lighting conditions by capturing and processing images obtained of said reflecting objects (1) by at least one camera (2), which comprises means for predicting lighting conditions capable of affecting the quality of the images, said camera comprising means for adapting the exposure time and/or aperture of the camera (2) to the predicted lighting conditions, wherein such means for predicting the lighting conditions capable of affecting the quality of the images comprise means for determining the azimuth (Az) of the direction of the camera (2) lens, means for determining the geographical position of the camera (2), means for determining universal time, all of which allow a prediction to be made of the solar radiation reflected by said reflecting object (1) in the direction of the camera(2) lens and therefore to limit the exposure time and/or aperture of the camera (2) for identifying the object.

## Description

The present invention relates to a method for identifying reflecting objects subjected to variable lighting conditions and a system for performing said method, which allow objects to be identified by capturing images using cameras in highly variable lighting conditions.

### BACKGROUND OF THE INVENTION

The state of the art is familiar with methods for identifying reflecting objects subjected to variable lighting conditions by capturing and processing images obtained of said reflecting objects by at least one camera.

Under variable lighting conditions, a good image quality is achieved by appropriately adapting the parameters of the lens, such as the lens aperture and/or exposure time. Usually, in CCD-type cameras the lens always remains open, and exposure is controlled by controlling the camera reading time and pixel refresh rate.

However, when the object to be identified is in motion, for example vehicle number plates or people's faces, this adaptation may not be fast enough to capture the object to be identified on time.

A well-known solution involves automatically determining the best parameters for capture on the basis of the luminosity measurements of the scene being captured.

This method, widely accepted by the photographic industry, has its limitations when it comes to automatically analysing images using so-called artificial vision systems.

In such cases, the ideal parameters for capturing an image of the scene are not necessarily useful for analysis of the image.

Specifically, they are not suitable when the objects or regions of interest for the application have luminosity conditions that are very different to those of the scene's mean luminosity.

Although there are technological approaches aimed at producing image sensors with a wide dynamic range, their objective is normally to obtain the best image of the scene and they do not manage to show the objects of interest with quality in all situations.

Environmental luminosity is insufficient for determining a scene's ideal exposure time for an object given that it depends on the following parameters:
- The scene's environmental luminosity, which depends on sources of light and reflections on other elements of the scene,
- The position of the source of light, for example, the position of the sun and/or
- The reflectivity index of the object, which is very different between a dark matt object and a light shiny object.

Various solutions have been proposed to resolve this problem, which in general have consisted of applying a method comprising the stages of:
- predicting the lighting conditions capable of affecting the quality of the images obtained,
- adapting the exposure time and/or aperture of the camera to the predicted lighting conditions,
- obtaining at least one image of the reflecting object using the camera,
for subsequent processing with a view to identifying the sought object.

In general, if allowed by the system's speed of response requirements, in other words capture and processing of the images, a hypothesis is made of the lighting range, in order to capture multiple images with different exposure times, so as to then automatically select those providing the most information about the object to be identified.

However, new applications, in particular outdoor ones, represent a challenge due to the extreme variations in the reflectance of sunlight on objects moving at high speed, which range from total darkness at night on intercity roads to highly intense radiation at midday in summer.

Also, this variability in the light is localised to the extent that it is practically impossible to correctly adapt the camera's parameters for a mean luminosity measurement.

To solve this, solutions have been proposed based on intelligent sensors that try to anticipate light reflection conditions on number plates, or systems based on the use of an environmental light sensor.

These prediction systems can be completed with multi-exposure systems, which use high speed image capture cameras.

In these systems, already developed by the applicant, there is an FPGA device connected to a highspeed megapixel camera. The combination of these two elements allows a high number of images to be captured and analysed, in the region of one thousand, for sets of four exposure times, for example.

This multi-exposure approach provides a high number of images of the same scene with different exposure parameters, from which the best samples are selected from the point of view of the object's identification.

This multi-exposure technique can be combined with the aforesaid prediction techniques, in order to verify the camera's parameters, and for example select a set of exposure times and increase the chances of obtaining quality images with a view to identifying the object.

Nonetheless, despite this prior range selection, the applicant has been able to verify that using the available technology, identification of the maximum number of objects is not yet ideal, and therefore, considers it necessary to improve the existing technologies.

### DESCRIPTION OF THE INVENTION

To this effect, the present invention proposes through the present invention to solve the problem by capturing at high speed multiple images with different exposure times and searching for objects in all of them using image-analysis algorithms, in order to finally build a new image in which all the objects of interest are visible in an optimum manner for the application.

Specifically, the invention achieves the proposed objectives by means of a method for identifying reflecting objects subjected to variable lighting conditions by capturing and processing the images obtained of said reflecting objects by at least one camera, which comprises the steps of:
- predicting the lighting conditions capable of affecting the quality of the images obtained,
- adapting the exposure time and/or aperture of the camera to the predicted lighting conditions,
- using the camera, obtaining at least one image of the reflecting object,
   which is **characterised in that** said prediction of the lighting conditions capable of affecting the quality of the images obtained comprises the sub-steps of,
- determining the azimuth of the direction of the camera lens,
- determining the geographical position of the camera,
- determining universal time,
and based on the aforesaid orientation of the camera lens, geographical position of the camera and universal time, predicting the solar radiation reflected by such object in the direction of the camera lens and adapting the exposure time and/or aperture of the camera to the predicted lighting conditions with a view to identifying such reflecting object.

By means of this method, it is possible limit to a much smaller range than using known techniques, the parameters of lens diaphragm aperture and/or exposure time allowing images to be captured with sufficient quality from the point of view of identifying the object in question.

Also, the device may be implemented, as shown below in a compact device, and with minimum calculation requirements, given that the prediction of the effect of reflection on the images captured by the camera is made using simple optics calculations.

According to other optional characteristics of the method of the invention, it includes:
- also obtaining the inclination (α) in respect of the horizontal place.
- predicting the orientation of the reflecting surface or surfaces of the object.
- making a prior hypothesis regarding the reflection index of the reflecting surface or surfaces of the reflecting object.

These steps have a special, albeit not limiting, application for the identification of number plates of vehicles in relative motion in respect of the camera, or of any other object capable of being identified by obtaining and processing images, such as faces.

In addition, due to the possibilities of real-time adaptation of the camera position, orientation and inclination parameters, the camera can also be mounted on mobile supports, either in movement or in rotation.

At the same time, the method may be completed with the following optional steps:
- prior to the aforesaid sub-steps, obtaining a measurement of mean environmental luminosity.
- subsequent to the aforesaid steps, based on the prediction of solar radiation reflected by the object, determining a set of exposure times that allow the different levels of reflectivity of the object to be covered, in other words carrying out a multi-exposure. Obviously, the method can also be applied for a single capture.
- following the previous phase, an image is captured for each time of the aforesaid set of times.
- then the object is searched for in the image, carrying out this sub-step using a pattern location process, and finally
- the regions of the image containing the object and its position within the camera's field of vision are transmitted for subsequent use as appropriate.

Likewise, the invention relates to a system that allows the method of the invention to be carried out, specifically to a system for identifying reflecting objects subjected to variable lighting conditions by capturing and processing images obtained of such reflecting objects by at least one camera, which comprises means for predicting lighting conditions capable of affecting the quality of the images, such camera comprising means of adaptation of the exposure time and/or aperture of the camera to the predicted lighting conditions, **characterised in that** such means for predicting lighting conditions capable of affecting the quality of the images comprise means for determining the azimuth of the direction of the camera lens, means for determining the geographical position of the camera, means for determining universal time, all of which make it possible to predict the solar radiation reflected by such reflecting object in the direction of the camera lens and therefore to limit the exposure time and/or aperture of the camera to adapt it in real time according to the predicted lighting conditions.

The system may also include the following characteristics, taken in isolation, or as appropriate, using all technically possible combinations:
- means for determining the azimuth include either an integrated compass forming part of the system or an input allowing said azimuth to be entered.
- means for determining the geographical position of the camera include either an integrated GPS or an input allowing said geographical position to be entered.
- it may comprise means for determining the inclination in respect of the horizontal plane of the camera's line of vision.
- it may comprise a sensor module for environmental lighting.
- the compass and GPS are integrated on the same electronic board or chip, preferably implemented using CMOS technology, provided with an input for signals coming from the camera, a control output for exposure time and/or aperture of the camera and configured to carry out the aforesaid predictions.

### BRIEF DESCRIPTION OF THE DRAWINGS

For a better understanding of all of the foregoing, drawings are attached, which schematically and only by way of a non-limiting example, represent a practical embodiment of the system of the invention.
Figure 1 is a plan view showing the basic components of the invention.
Figure 2 is a block diagram outlining the relationship between the basic blocks constituting a system according to the present invention.

### DESCRIPTION OF A PREFERRED EMBODIMENT

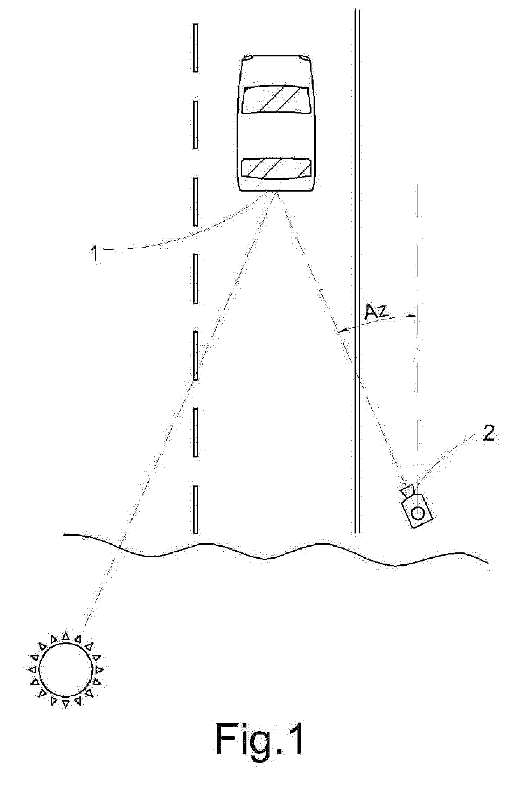

In reference to figure 1, the invention relates to a method for identifying reflecting objects 1 subjected to variable lighting conditions by capturing and processing images obtained of such reflecting objects 1 by at least one camera 2, which comprises the steps of:
- predicting the lighting conditions capable of affecting the quality of the images obtained,
- adapting the exposure time and/or aperture of the camera 2 to the predicted lighting conditions,
- using the camera, obtaining at least one image of the reflecting object.

These steps constitute common characteristics of the solutions in the state of the art, the present invention being **characterised in that** the prediction of the lighting conditions capable of affecting the quality of the images obtained comprises the sub-steps of,
- determining the azimuth Az of the direction of the camera 2 lens,
- determining the geographical position of the camera 2,
- determining universal time,
and based on said orientation Az of the camera 2 lens, the geographical position of the camera 2 and universal time, predicting the solar radiation reflected by such object in the direction of the camera 2 lens and adapting the exposure time and/or aperture of the camera 2 to the predicted lighting conditions with a view to identifying such reflecting object 1.

Therefore, a selection is made that not only takes into account principally the effect that reflection of radiation incident on the object will have on the camera.

Obviously, optionally and whenever possible, a prediction of the orientation of the reflecting surface or surfaces of the object can be made.

At the same time, it has been verified that for the specific purpose of reading number plates, it is sufficient to know the camera's orientation, but in some cases it may also be interesting to obtain its inclination α in respect of the horizontal plane.

Also, when the reflection index of the object to be identified is approximately known, it is possible to make a prior hypothesis over a range of reflection indices of the reflecting surface or surfaces of the reflecting object 1, with a view to further limiting the parameters of the camera that allow suitable images to be obtained for identification of the object.

In addition, the invention relates to a system for identifying reflecting objects 1 subjected to variable lighting conditions by capturing and processing images obtained of such reflecting objects 1 by at least one camera 2, which comprises means for predicting lighting conditions capable of affecting the quality of the images, said camera comprising means for adapting the exposure time and/or aperture of the camera 2 to the predicted lighting conditions, **characterised in that** such means for predicting the lighting conditions capable of affecting the quality of the images comprise means for determining the azimuth Az of the direction of the camera 2 lens, means for determining the geographical position of the camera 2, means for determining universal time, all of which allow a prediction to be made of the solar radiation reflected by such reflecting object 1 in the direction of the camera lens 2 and therefore to limit the exposure time and/or aperture of the camera 2 to adapt it in real time according to the predicted lighting conditions.

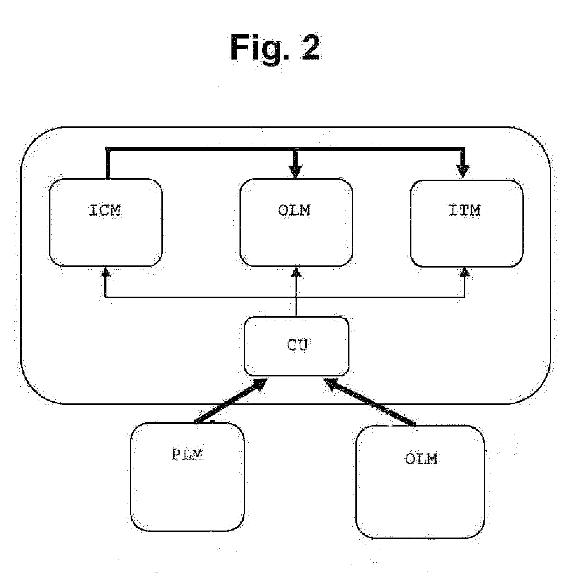

As may be appreciated from figure 2, the image capture system is made up of the following elements, combined in an electronic circuit made up of different chips welded onto an electronic board, or integrated into a single chip, which is the preferred option:
- Image capture module (ICM). This refers to an image sensor with CMOS or CCD technology. The preferred technology is CMOS because it allows the other elements to be integrated on the same chip.
- Object location module (OLM). This refers to a processor optimised for high speed detection of objects of interest in captured images.
- Image transmitter module (ITM). This refers to a processor capable of transmitting the images of detected objects indicating their position in the image sensor's field of vision.
- Position location module (PLM). This refers to a GPS element capable of accurately determining the geographical position of the system and the exact time. This is an optional module which allows the object search time to be reduced as it has one less degree of freedom.
- Orientation location module (OLM). This refers to an electronic compass with the capacity to establish orientation and to communicate it to the image capture module. It combines with the previous module to reduce the search time for the objects.
- Control unit for coordination of all other modules.

As already mentioned, and expressed in other words, the method of the invention is iterative and consists of capturing multiple images and of searching them for the objects of interest for an application. The following five operations are carried out in a cyclical manner:
1. Measuring mean environmental luminosity using the image sensor module, in the embodiment available thereof.
2. Calculating the position of the sun on the basis of the latitude provided by the positioning system (GPS) and the system's orientation location module (compass), taking into account the time of day.
3. Determining a set of exposure times that allows the different levels of reflectivity of the object of interest to be covered.
4. Adding to the exposure times of the set above an amount based on the influence of the sun.
5. For each candidate exposure time of the aforementioned list, carrying out the following actions:
   a. Capturing an image using the candidate exposure time.
   b. Searching for the objects in the image using a pattern location method implemented at high speed in the object location module.
   c. Transmitting the regions of the image containing the object and its position in the camera's field of vision (position X,Y in the original image).

Finally, although the method and system of the invention has been described as applying to number plate identification, the person skilled in the art may conceive its use in any other application for the recognition/identification of moving objects by capturing images using one or several cameras in highly variable lighting conditions.

## Claims

1. Method for identifying reflecting objects (1) subjected to variable lighting conditions by capturing and processing images obtained of said reflecting objects (1) using at least one camera (2), comprising the steps of:
- predicting lighting conditions capable of affecting the quality of the images obtained,
- adapting the exposure time and/or aperture of the camera (2) to the predicted lighting conditions,
- using the camera (2) obtaining at least one image of the reflecting object,
**characterised in that** the prediction of the lighting conditions capable of affecting the quality of the images obtained comprises the sub-steps of,
- determining the azimuth (Az) of the direction of the camera (2) lens,
- determining the geographical position of the camera (2),
- determining universal time,
and on the basis of such orientation (Az) of the camera (2) lens, the geographical position of the camera (2) and the universal time, making a prediction of the solar radiation reflected by said object in the direction of the camera (2) lens and adapting the exposure time and/or aperture of the camera (2) to the predicted lighting conditions with a view to identifying said reflecting object (1).

2. Method according to the preceding claim, wherein in addition to determining the azimuth (Az) of the direction of the camera (2) lens, its inclination is also obtained in respect of the horizontal plane.

3. Method according to any of the preceding claims, wherein in addition a prediction is made of the orientation of the reflecting surface or surfaces of the object.

4. Method according to any of the preceding claims, wherein in addition a prior hypothesis is made regarding the reflection index of the reflecting surface or surfaces of the reflecting objects (1).

5. Method according to any of the preceding claims, wherein said reflecting object is a vehicle number plate or any other object capable of being identified by capturing and processing images.

6. Method according to any of the preceding claims, wherein prior to the aforementioned sub-steps a measurement of mean environmental luminosity is taken.

7. Method according to any of the preceding claims, wherein afterwards based on the prediction of the solar radiation reflected by said object a set of exposure times is determined allowing the different levels of reflectivity of the object to be covered.

8. Method according to the preceding claim, wherein next an image is captured for each time of the aforesaid set of times.

9. Method according to the preceding claim, wherein next the object is searched for in the image, carrying out this sub-step using a pattern location process.

10. Method according to the preceding claim, wherein next the regions of the image containing the object are transmitted together with their position in the camera's field of vision.

11. System for identifying reflecting objects (1) subjected to variable lighting conditions by capturing and processing images obtained of said reflecting objects (1) by at least one camera (2), which comprises means for predicting lighting conditions capable of affecting the quality of the images, said camera comprising means for adapting the exposure time and/or aperture of the camera (2) to the predicted lighting conditions, **characterised in that** such means for predicting the lighting conditions capable of affecting the quality of the images comprise means for determining the azimuth (Az) of the direction of the camera (2) lens, means for determining the geographical position of the camera (2), means for determining universal time, all of which allow a prediction to be made of the solar radiation reflected by said reflecting object (1) in the direction of the camera(2) lens and therefore to limit the exposure time and/or aperture of the camera (2) to adapt it in real time according to the predicted lighting conditions.

12. System according to either of the two preceding claims, wherein the means for determining the azimuth (Az) are either a compass integrated in the system or an input that allows such azimuth (Az) to be entered.

13. System according to the preceding claim, wherein the means for determining the geographical position of the camera (2) are either an integrated GPS or an input which allows such geographical position to be entered.

14. System according to the preceding claim, which comprises means for determining the inclination in respect of the horizontal plane of the camera's line of vision.

15. System according to any of the four preceding claims, which comprises an environmental lighting sensor module.

16. System according to claims 12 and 13, wherein the compass and GPS are integrated on the same electronic board or chip provided with an input for signals coming from the camera, an output for controlling the exposure time and/or aperture of the camera (2) and which is configured to carry out such predictions.

17. System according to the preceding claim, wherein such chip is implemented with CMOS technology.
